# EUROPÄISCHE PATENTSCHRIFT

(11) **EP 0 602 493 B1**
(45) Veröffentlichungstag und Bekanntmachung des Hinweises auf die Patenterteilung: **11.09.1996**
(21) Anmeldenummer: 93119621.6
(22) Anmeldetag: 06.12.1993
(51) Int. Cl.: B60J 1/10, B61D 25/00

(54) **Elastischer Dichtungsrahmen am Notausstieg eines Fahrzeuges**
Elastic sealing frame for vehicle emergency exit
Bordure d'étanchéité élastique pour issue de secours de véhicule

(30) Priorität: 18.12.1992 CH 3878/92
(43) Veröffentlichungstag der Anmeldung: 22.06.1994
(73) Patentinhaber: DÄTWYLER AG SCHWEIZERISCHE KABEL-, GUMMI- UND KUNSTSTOFFWERKE, CH-6460 Altdorf (CH)
(72) Erfinder: Herwegh, Norbert, CH-6467 Schattdorf (CH); Storbeck, Klaus Peter, D-2810 Verden an der Aller (DE)
(74) Vertreter: Siebert, Rolf

(56) Entgegenhaltungen:
- EP-A- 0 013 978
- FR-A- 2 153 117
- FR-A- 2 209 678

## Beschreibung

Die Erfindung betrifft einen elastischen Dichtungsrahmen am Notausstieg eines Fahrzeuges, nach dem Oberbegriff des Anspruches 1.

Fahrzeuge des öffentlichen Verkehrs, aber auch des privaten, welche zahlreiche Fahrgäste befördern müssen wie Reisebusse, müssen mit Notausstiegen versehen sein, wenn sich die normalen Fensterscheiben gar nicht oder nicht mehr weit genug herunterbewegen lassen, um bei Unfällen den Reisenden den Ausstieg aus dem Fahrzeug zu ermöglichen. Ursprünglich befand sich in der Nähe eines solchen Notausstieges ein Werkzeug, meist ein Hammer, mit welchem die fest eingesetzte Scheibe zertrümmert werden konnte, um den Ausgang freizubekommen. Seit aber aus zwingenden Vorschriften die Scheiben aus Sicherheitsverbundglas bestehen, ist der Hammer wertlos, da eine solche Scheibe sich nicht mehr einschlagen lässt. Man musste daher nach anderen Lösungen suchen.

Bei klimatisierten Fahrzeugen mit fest eingesetzten Scheiben, welche mittels Dichtungsrahmen direkt in die Fahrzeugwand eingefügt sind, hat man beim Notausstieg einen solchen Rahmen vorgesehen, der einen Handgriff aufweist. Damit kann der Dichtungsrahmen aus seiner Verankerungsnut herausgezogen werden, sodass die von ihm eingefasste Scheibe ohne weitere Hilfsmittel aus der Oeffnung herausgenommen werden kann. Solche Ausführungen sind seit längerem bekannt, wobei die Scheiben in der Regel durch spezielle Vorkehrungen an der Unterseite mit Hilfe von Seilen mit der Fahrzeugwand verbunden sind, sodass die Scheibe bei einem umgekippten Fahrzeug nach Entfernung des Dichtungsrahmens nicht unkontrolliert herunterfallen kann.

Aus optischen und aus Sicherheitsgründen ist der Handgriff möglichst klein gehalten, d.h. er soll in der Ansichtsfläche nicht grösser erscheinen als der eigentliche Dichtungsrahmen. Ist er grösser, ragt er in das Scheibenlichtmass, was unschön ist und Reisende reizt, an ihm zu ziehen, ohne dass ein Notfall vorliegt.

Der Handgriff ist über einen Teilbereich, meist über seinen oberen horizontalen Rand, mit dem Dichtungsrahmen zugfest verbunden, d.h. die ganze von der Hand ausgeübte Zugkraft wird über diesen Teilbereich übertragen. Unterhalb desselben weist der Handgriff einen in der Regel zunehmenden Abstand auf, sodass eine Vertiefung gebildet wird, in welche die Hand eingreift. Wegen dieser kleinen Abmessungen kommt man aber kaum mit den Fingern und schon gar nicht mit der Hand in diese Vertiefung hinein, sodass man nicht die notwendige Kraft aufbringen kann, um den Dichtungsrahmen aus seiner Verankerungsnut herauszuziehen.

Die Erfindung bezweckt nun, diese Nachteile zu vermeiden und den Handgriff so mit dem Dichtungsrahmen zu verbinden, dass er von der Hand gut umfasst werden kann, sodass die notwendige Zugkraft zum Herauslösen aufgebracht werden kann. Dabei darf aber der Handgriff nicht über eine zu grosse Strecke überhaupt keine Verbindung zum Dichtungsrahmen aufweisen. Er könnte sonst je nach Herstellung und Montage des letzteren und auch wegen der Elastizität des Materials plötzlich eine andere Länge als der Dichtungsrahmen in jenem Bereich aufweisen. Dadurch wird er wellig und hebt sich vom Rahmen ab, kann also vom Rahmen abweichen. Dieses Ausweichen ist nicht nur optisch unschön, sondern verleitet wiederum dazu, dass man dazwischen greifen und unkontrolliert am Handgriff reissen kann.

Die erwähnten Nachteile werden erfindungsgemäss durch einen Dichtungsrahmen mit Handgriff vermieden, der durch die Merkmale des Anspruches 1 gekennzeichnet ist.

Wahlweise kann die Verbindung aus einzelnen Stegen bestehen. Es ist aber auch möglich, die Verbindung durchgehend, als eine Art dünner Membran, zu gestalten, die zwar den Handgriff in bezug auf den Dichtungsrshmen richtig positioniert, im Notfall aber durch die Finger der Hand durchstossen und dabei zerrissen werden kann. Ebenfalls sind Kombinationen dieser beiden Ausführungsformen denkbar.

Die Erfindung wird anhend der beiliegenden Zeichnungen, in denen Ausführungsbeispiele dargestellt sind, näher erläutert. Es zeigen:
- Fig. 1: eine Ansicht eines Ausschnittes des Dichtungsrahmens, mit dem Handgriff,
- Fig. 2: die bisherige Ausführungsform in einem Querschnitt durch die Fig. 1,
- Fig. 3: eine erste Ausführungsform der Erfindung in einem gleichen Schnitt wie in Fig. 2, und
- Fig. 4: eine Ansicht wie Fig.1, in welcher aber eine weitere Ausführungsform dargestellt ist.

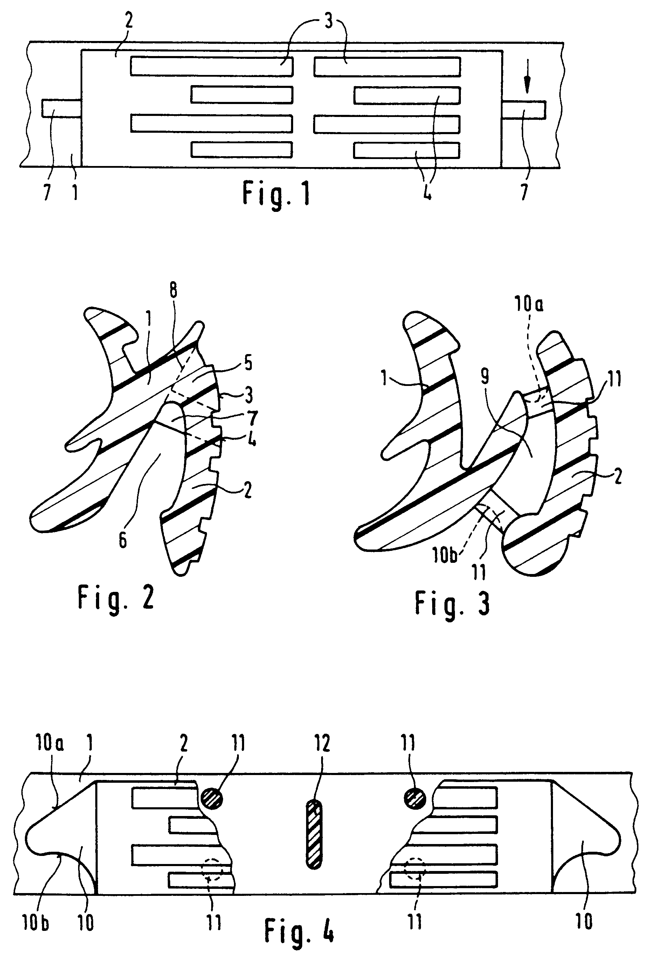

Fig. 1 und 2 zeigen einen bisherigen Dichtungsrahmen 1, hier einen Ausschnitt aus seinem oberen horizontal verlaufenden Teil, mit einem daran angebrachten Handgriff 2. Der Rahmen 1 umfasst eine in ihn eingesetzte Fensterscheibe (nicht dargestellt), die als Notausstieg gekennzeichnet ist. Der Handgriff 2 ist, wie schon erwähnt, bei diesem bekannten Rahmen ein integraler Bestandteil desselben und wird mit ihm zusammen in einer Spritzgussform hergestellt. Die in Fig. 1 ersichtlichen, verschieden langen Rechtecke 3, 4 stellen Beschriftungen dar, die durch entsprechende Aussparungen in der Form gleichzeitig mit dem Rahmen 1 und dem Handgriff 2 entstehen und in mehreren Sprachen auf den Verwendungszweck und die Betätigung hinweisen ("Notausstieg. Hier ziehen"). Wie aus Fig. 2 ersichtlich, sind der Rahmen 1 und der Handgriff 2 am oberen Rande des letzteren durch eine Uebergangszone 5 miteinander verbunden. Durch diese Zone 5 entsteht unter ihr eine Vertiefung 6, die einerseits vom Rahmen 1 und andererseits vom abstehenden Teil des Handgriffes 2 begrenzt ist. Diese dient als Oeffnung für die Finger der Hand, die den Handgriff von hinten her erfassen und an ihm ziehen, in Fig.2 also nach rechts. Dadurch wird der Rahmen 1 zuerst an dieser Stelle seines Umfanges aus seiner (nicht dargestellten) Verankerungsnut in der Fahrzeugwand herausgelöst, um derart die Scheibe frei zu bekommen und damit eine Oeffnung für den Ausstieg der eingeschlossenen Fahrgäste zu schaffen.

Wie ersichtlich, ist die Uebergangszone 5 solid ausgeführt, denn sie muss ja die ganze Zugkraft übertragen können. Zusätzlich ist an jedem seitlichen Ende des Handgriffes 2 noch eine Uebergangsrippe 7 angebracht, welche die Verbindung zwischen Handgriff 2 und Rahmen 1 noch verstärkt. Sie ist, in Richtung des Pfeiles in Fig. 1 gesehen, dreieckförmig, um von dem vorstehenden Handgriff 2 in den weiter zurückliegenden Rahmen 1 überzugehen, und ist auch in Fig. 2 in Ansicht dargestellt. Wie der Rahmen 1 ausserhalb des Handgriffes 2 im Querschnitt aussieht, ist durch die gestrichelte Linie 8 in Fig. 2 dargestellt; er umfasst also den links von ihr liegenden Teil.

Da die Uebergangszone 5 wie erwähnt kräftig ausgeführt ist, wird durch sie die Vertiefung 6 von oben her begrenzt, sodass die Finger nur beschränkt Platz finden. Eine Vergrösserung des Handgriffes 2 ist aus optischen Gründen nicht möglich. Es zeigt sich daher, dass es sehr viel Mühe braucht, den Rahmen 1 dennoch freizulegen. Bei einem Unfall, besonders wenn noch ein Brand ausbrechen sollte, ist dies ein schwerwiegender Nachteil.

Man hat daher erstmals vorgeschlagen, die Verbindung zwischen Rahmen 1 und Handgriff 2 soweit zu trennen, dass nur noch die beiden seitlichen Enden des Handgriffes mit dem Rahmen 1 zugfest verbunden werden müssen, also im Gebiet der Uebergangsrippen 7. Dadurch wird dazwischen ein Schlitz gebildet, durch den man mit der Hand hindurchgreifen kann, wobei der aus elastischem Material bestehende Handgriff 2 gedehnt wird und nachgibt.

Eine solche Trennung ist in Fig. 3 angedeutet. Durch den neu entstandenen Schlitz 9 lässt sich der Handgriff 2 viel besser erfassen als bisher. Weil er aber nur noch mit seinen Enden am Rahmen 1 hängt, besteht die Gefahr, dass er sich schon unmittelbar nach der Montage des Rahmens 1 von diesem abhebt. Der Rahmen ist ja zwangsweise in seiner Nut geführt, während der Handgriff 2 zwischen den beiden Enden, also seinen Verankerungsbereichen, führungslos ist und schon bei geringen Längenunterschieden infolge Herstellung und/oder Montage ausweicht, also dann, wenn er länger ist als der entsprechende Abschnitt des Rahmens 1. Dieses Ausweichen oder Verwerfen führt zu einem Abheben des Handgriffe 2, was wie erwähnt nicht nur unschön ist, sondern auch zur Betätigung des Handgriffes 2 verleitet.

Um dies zu vermeiden, bleibt nichts anderes übrig, als irgend eine Verbindung zwischen Rahmen 1 und Handgriff 2 auch zwischen dessen Enden herzustellen. Dann muss aber der Schlitz 9 entweder erhalten oder dann im Notfall mindestens leicht freilegbar sein. Hierzu bieten sich verschiedene Möglichkeiten an, die nun anhand der Fig. 3 und 4 näher erläutert werden sollen.

Vorerst ist auf Fig. 4 hinzuweisen und zwar auf die beiden seitlichen Enden des Handgriffes 2. Weil nun die durchgehende Uebergangszone 5 fehlt, muss die gesamte Zugkraft auf die beiden Uebergänge an den Handgriffenden übertragen werden. Diese Uebergänge, hier mit 10 bezeichnet, sind daher im Vergleich zu den Uebergangsrippen 7 erheblich stärker ausgeführt. Sie reichen praktisch über die ganze Höhe des Handgriffes 2 und gehen in den weiter zurückliegenden Rahmen 1 derart über, dass auch er über einen grossen Bereich von ihnen erfasst wird. In Fig. 3 zeigen die gestrichelten Linien 10a, 10b die Begrenzungen dieser Uebergänge an. Alles zwischen diesen Linien gehört zum jeweiligen Uebergang, der, wie die Uebergangsrippen 7, ebenfalls nur in Ansicht und nicht im Schnitt gezeigt ist, da er ja ausserhalb des Handgriffes 2 liegt.

Die eigentlichen Mittel zur Verhinderung des weiter oben erwähnten Aufwölbens sind jedoch vor allem aus Fig. 3 ersichtlich. In einer Ausführungsform sind es Stege 11, die gemäss Fig. 4 nur an vereinzelten Stellen entlang des Handgriffes angeordnet sind. Je ein Steg 11 befindet sich nahe am oberen Rand und je ein Steg nahe am unteren Rand des Handgriffes 2, wie aus Fig. 3 klar ersichtlich. Der Querschnitt der Stege 11 kann beliebig sein; meist ist er rund oder elliptisch, allenfalls oval. Auch die Anzahl dieser Stege 11 ist beliebig. In Fig. 3 sind insgesamt vier solcher Stege dargestellt. Zweckmässig bleibt zwischen den beiden Paaren von übereinander angeordneten Stegen ein breiter Zwischenraum, durch den man bequem hineingreifen kann.

Eine weitere Möglichkeit liegt in der Anordnung eines einzigen hohen, aber dünnen Steges 12 (Fig.4) Die Stege 11 und 12 können auch gleichzeitig vorhanden sein.

Denkbar ist schliesslich eine hier nicht dargestellte, aber leicht vorstellbare Möglichkeit eines einzelnen Steges, der aber im Gegensatz zum Steg 12 horizontal, in etwa der halben Höhe des Handgriffes 2, verläuft und sich vom einen Ende des Handgriffes zum anderen erstreckt. Er muss so dünn sein, dass er von den in die Vertiefung geratenden Fingern ohne weiteres durchstossen und sicher zerrissen werden kann, um das Umgreifen des Handgriffes zu ermöglichen.

Wesentlich an diesen Stegen ist, dass sie erheblich schwächer sind als die übrigen Verbindungen, also die Uebergänge 10. Empfehlenswert ist es, wenn sie derart dünn sind, dass sie beim Hineingreifen in den Schlitz 9 sofort nachgeben, damit man mit der Hand den Handgriff 2 umfassen und an ihm ziehen kann. Wie erwähnt, muss dann nach dem Nachgeben der Stege die gesamte Zugkraft von den beiden Uebergängen 10 übertragen werden.

In jedem Fall sind Stege erwünscht, die in Anzahl und Querschnitt so gestaltet sind, dass eine genau definierte Sollbruchkraft erreicht werden kann. Wird zum Beispiel eine Aussreisskraft des Dichtungsrahmens aus seiner Nut von 400 N je Griff angestrebt, so kann beispielsweise eine Sollbruchkraft vonn 100 N durch geeignete Dimensionierung der Stege erreicht werden.

## Patentansprüche

1. Elastischer Dichtungsrahmen am Notausstieg eines Fahrzeuges, der an einer Stelle einen mit ihm über einen Teilbereich zugfest vernundenen Handgriff aufweist, mittels welchem der Dichtungsrahmen (1) samt der von ihm abdichtend umfassten Fensterscheibe aus seiner in der Fahrzeugwand angebrachten Verankerung herausziehbar ist, und wobei der Handgriff (2) ausserhalb des genannten Teilbereiches einen Abstand vom Dichtungsrahmen (1) zwecks Bildung einer das Umfassen des Handgriffes (2) ermöglichenden Vertiefung aufweist, dadurch gekennzeichnet, dass der Teilbereich mit der zugfesten Verbindung durch zwei an den seitlichen Enden des Handgriffes (2) angebrachten Uebergängen (10) gebildet ist, während die dazwischen liegende Vertiefung als durchgehender Schlitz (9) ausgebildet ist, der jedoch von wenigstens einer Verbindung (11; 12) zwischen dem Dichtungsrahmen (1) und dem Handgriff (2) durchsetzt ist, um den letzteren (2) auch im Bereich zwischen den beiden Uebergängen in seiner Lage relativ zum Dichtungsrahmen zu positionieren, welche Verbindung jedoch erheblich schwächer als die Uebergänge (10) ist, um beim Ergreifen des Handgriffes nachzugeben und dabei den Schlitz (9) zur vollständigen Umfassung des Handgriffes ganz freizulegen.

2. Dichtungsrahmen nach Anspruch 1, dadurch gekennzeichnet, dass mehrere Verbindungen in Form von Stegen (11) vorhanden sind, die sowohl nahe dem oberen als auch nahe dem unteren Rand des Handgriffes (2) angebracht sind und über die Länge der Vertiefung verteilt sind.

3. Dichtungsrahmen nach Anspruch 1, dadurch gekennzeichnet, dass ein einziger, in der Mitte des Abstandes zwischen den seitlichen Enden des Handgriffes positionierter Steg (12) von beliebigem Querschnitt vorhanden ist, der im wesentlichen dieselbe Höhe wie der Handgriff hat.

4. Dichtungsrahmen nach Anspruch 1, dadurch gekennzeichnet, dass ein vom einen zum andern seitlichen Ende reichender, mindestens annähernd auf halber Höhe des Handgriffes verlaufender Steg vorhanden ist.

5. Dichtungsrahmen nach Anspruch 1, dadurch gekennzeichnet, dass mehrere Verbindungen (11, 12) von unterschiedlichen Abmessungen und Querschnittsformen vorgesehen sind.

## Claims

1. Elastic sealing frame for vehicle emergency exit, comprising at one location a handle that has a tensionproof connection to it over a part of its area, enabling the frame, together with the window panel sealingly surrounded by it, to be pulled out of its anchorage in the vehicle wall, the handle (2) being at a distance from the frame outside of said partial area in order to form a recess that renders it possible to grip the handle, characterized in that the partial area forming the tensionproof connection is formed by two transitions (10) at the lateral ends of the handle (2) whereas the recess in between is formed as a continuous slot (9) which, however, is interspersed by at least one connection (11; 12) between sealing frame (1) and handle (2) in order to position the latter (2) relatively to the frame also in the area between the two transitions, said connection being substantially waker than the transitions (10) so as to yield when gripping the handle, thereby totally freeing the slot (9) for gripping the handle completely.

2. Sealing frame according to Claim 1, characterized in that there is a number of connections in form of bridges (11) which are located close to the upper edge of the handle as well as close to the lower one and are distributed over the length of the recess.

3. Sealing frame according to Claim 1, characterized in that there is a single bridge (12) of any cross section, located in the center of the distance between the lateral ends of the handle, said bridge being substantially of the same height as the handle.

4. Sealing frame according to Claim 1, characterized in that there is a bridge extending from one lateral end of the handle to the other and located at a level at least approximately halfway up the handle.

5. Sealing frame according to Claim 1, characterized in that there is a number of connections (11; 12) having different dimensions and cross-sections.

## Revendications

1. Cadre d'étanchéité élastique de sortie de secours d'un véhicule qui présente, à un endroit, une poignée reliée à ce dernier, par une zone partielle, de manière résistante à la traction, poignée au moyen de laquelle le cadre d'étanchéité (1) peut être extrait, avec une vitre entourée de manière étanche par ce dernier, de son ancrage ménagé dans la paroi du véhicule, et la poignée (2) présentant, à l'extérieur de ladite zone partielle, un espace par rapport au cadre d'étanchéité (1) en vue de la formation d'une cavité permettant l'incorporation de la poignée (2), caractérisé en ce que la zone partielle, comportant la liaison résistant à la traction, est constituée par deux parties formant transition (10) se trouvant aux extrémités latérales de la poignée (2), tandis que la cavité intercalée est réalisée comme une fente continue (9) qui est cependant traversée par au moins une liaison (11 ; 12) entre le cadre d'étanchéité (1) et la poignée (2) pour positionner cette dernière (2) dans sa position par rapport au cadre d'étanchéité également dans la zone entre les deux transitions, liaison qui est cependant considérablement plus faible que les transitions (10) pour céder au moment où la poignée est saisie et pour libérer ainsi la fente (9) afin que la poignée soit complètement entourée.

2. Cadre d'étanchéité selon la revendication 1, caractérisé en ce que plusieurs liaisons se présentent sous la forme de traverses (11) qui sont ménagées aussi bien à proximité du bord supérieur qu'à proximité du bord inférieur de la poignée (2) et qui sont réparties sur toute la longueur de la cavité.

3. Cadre d'étanchéité selon la revendication 1, caractérisé en ce qu'il existe une traverse unique (12) positionnée au milieu de la distance entre les extrémités latérales de la poignée dont la section transversale est quelconque et dont la hauteur est sensiblement la même que la poignée.

4. Cadre d'étanchéité selon la revendication 1, caractérisé en ce qu'il est prévu une traverse allant d'une extrémité latérale à l'autre au moins approximativement à mi-hauteur de la poignée.

5. Cadre d'étanchéité selon la revendication 1, caractérisé en ce qu'il est prévu plusieurs liaisons (11, 12) de dimensions et de formes de sections transversales diverses.
